# EUROPEAN PATENT APPLICATION

(11) **EP 4 796 418 A1**
(43) Date of publication of application: **26.08.2026**
(21) Application number: 23956113.7
(22) Date of filing: 20.10.2023
(51) Int. Cl.: B62D 21/15, B60K 5/00, B62D 25/08, B62D 25/20

(54) **POWER UNIT PROTECTION STRUCTURE FOR VEHICLE**

(71) Applicant: Nissan Motor Co., Ltd., Yokohama-shi, Kanagawa 221-0023 (JP)
(72) Inventor: SHIGEMATSU Satoshi, Atsugi-shi, Kanagawa 243-0123 (JP); NABUCHI Hiroaki, Atsugi-shi, Kanagawa 243-0123 (JP); MATSUDA Yoshiyuki, Atsugi-shi, Kanagawa 243-0123 (JP); SAITOU Masazumi, Atsugi-shi, Kanagawa 243-0123 (JP)
(74) Representative: Global IP Europe Patentanwaltskanzlei
(86) International application number: PCT/JP2023/037967
(87) International publication number: WO 2025/083866

(57) **Abstract**

A power unit protection structure (1) for a vehicle (V) includes: a side member (3) of the vehicle (V); a power unit (2) mounted on the vehicle (V) and having a protected component (25) arranged to face the side member (3) in a vehicle width direction; and a liquid hose (4) connected to a radiator (5) of the vehicle (V). At least a part (45) of the liquid hose (4) is arranged between the side member (3) and the protected component (25) and overlaps with both the side member (3) and the protected component (25) in a side view of the vehicle (V).

## Description

### TECHNICAL FIELD

The present invention relates to a power unit protection structure for a vehicle.

### BACKGROUND ART

Patent Literature 1 discloses a front side member structure for a vehicle. In this front side member structure, the strong front side member composed of a tubular hollow member can be bent not only at the first weak portion but also at the second weak portion at the time of vehicle frontal collision, thereby increasing the impact absorbing stroke and enhancing the effect of absorbing collision energy.

### CITATION LIST

### PATENT LITERATURE

Patent Literature 1: Japanese Patent No. 5749748

### SUMMARY OF INVENTION

### PROBLEMS TO BE SOLVED BY INVENTION

In the technology disclosed in Patent Literature 1, the front side member is bent at the time of collision to absorb the energy of the collision, but the bent front side member interferes with the power unit. In addition, even in a vehicle having a front side member other than the structure disclosed in Patent Literature 1, the front side member is bent at the time of collision to interfere with the power unit in some cases. When the bent front side member interferes with the power unit, the components provided in the power unit may be damaged. When a protector is provided to protect the components provided in the power unit, an additional component is added, which increases weight and cost.

An object of the present invention is to provide a power unit protection structure for a vehicle capable of reducing or preventing damage to a protected component of a power unit at the time of vehicle collision without adding an additional component.

### SOLUTION TO SOLVE PROBLEMS

A power unit protection structure for a vehicle according to an aspect of the present invention includes: a side member of the vehicle; a power unit mounted on the vehicle and having a protected component arranged to face the side member in a vehicle width direction; and a liquid hose connected to a radiator of the vehicle. At least a part of the liquid hose is arranged between the side member and the protected component and overlaps with both the side member and the protected component in a side view of the vehicle.

### EFFECTS OF INVENTION

The above structure makes it possible to reduce or prevent damage to a protected component of a power unit at the time of vehicle collision without adding an additional component.

### BRIEF DESCRIPTION OF DRAWINGS

[FIG. 1] FIG. 1 is a top view of a vehicle front portion provided with a power unit protection structure for a vehicle according to an embodiment of the present invention.
[FIG. 2] FIG. 2 is a partial cross-sectional view of the power unit protection structure for a vehicle of FIG. 1, as seen from the front side of the vehicle.
[FIG. 3] FIG. 3 is an enlarged view of the main portion of FIG. 2.
[FIG. 4] FIG. 4 is a partial cross-sectional perspective view around a busbar connection and an opening of the power unit, as seen from the right front side of the vehicle.
[FIG. 5] FIG. 5 is a cross-sectional perspective view illustrating the vicinity of a fixing portion of a front side member to which a liquid hose is fixed, as seen from the left front side of the vehicle.
[FIG. 6] FIG. 6 is a side view of the power unit protection structure for a vehicle of FIG. 1, as seen from the right side of the vehicle.
[FIG. 7] FIG. 7 is a diagram illustrating the impact absorbing characteristics of a liquid hose.
[FIG. 8] FIG. 8 is a top view of the right-side half of the vehicle front portion of FIG. 1, which illustrates the state before deformation.
[FIG. 9] FIG. 9 is a top view of the right-side half of the vehicle front portion of FIG. 1, which illustrates the deformed state at the time of vehicle collision.

### DESCRIPTION OF EMBODIMENTS

Hereinafter, an embodiment of the present invention will be described in detail with reference to the drawings. In the drawings, the front of the vehicle V is denoted by FR, the rear by RR, the right by RH, the left by LH, up by UP, and down by DN. In the following description, the terms front, rear, right, left, up, and down refer to the directions of the vehicle V, unless otherwise specified. The vehicle width direction means the left-right direction of the vehicle V.

### [Embodiment]

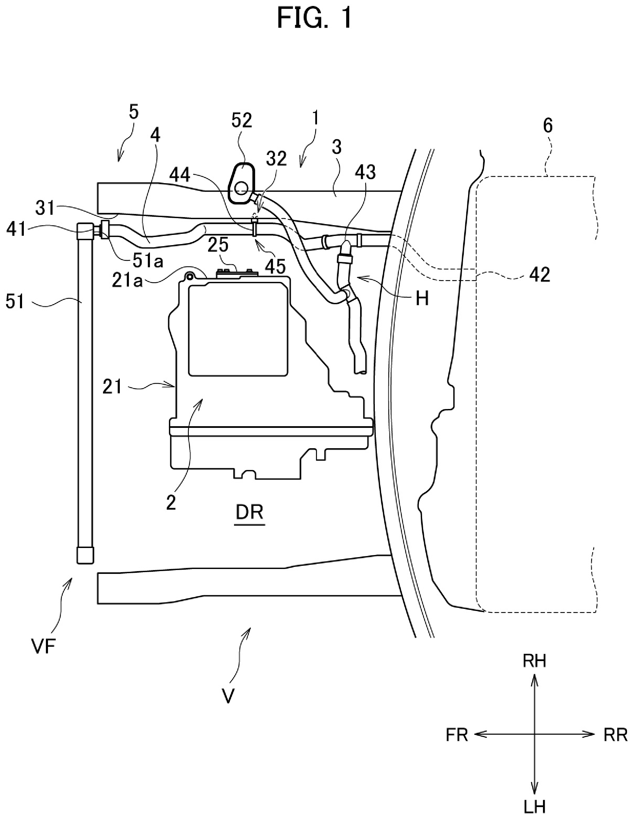

A power unit protection structure for a vehicle 1 (hereinafter, referred to as power unit protection structure 1) according to an embodiment of the present invention will be described with reference to FIGS. 1 to 9. As illustrated in FIG. 1, the power unit protection structure 1 is provided in the front portion VF of the vehicle V, and includes a power unit 2, a front side member (side member) 3 of the vehicle V, and a liquid hose (radiator hose) 4. The power unit 2 has a busbar cover (protected component) 25, which will be described later, as a protected component to avoid damage at the time of collision of the vehicle V. The liquid hose 4 is sandwiched between the power unit 2 and the front side member 3 to reduce or prevent damage to the busbar cover 25 at the time of collision of the vehicle V. In the present embodiment, the liquid hose 4 includes both a hose and the liquid present in the hose.

As illustrated in FIG. 1, the vehicle V includes the power unit 2, the front side member 3, the liquid hose 4, a radiator 5, and a battery 6. The vehicle V has a drive chamber DR in the front portion VF positioned at the front. A vehicle interior is provided behind the drive chamber DR, and a non-illustrated floor panel is provided at the bottom of the vehicle interior.

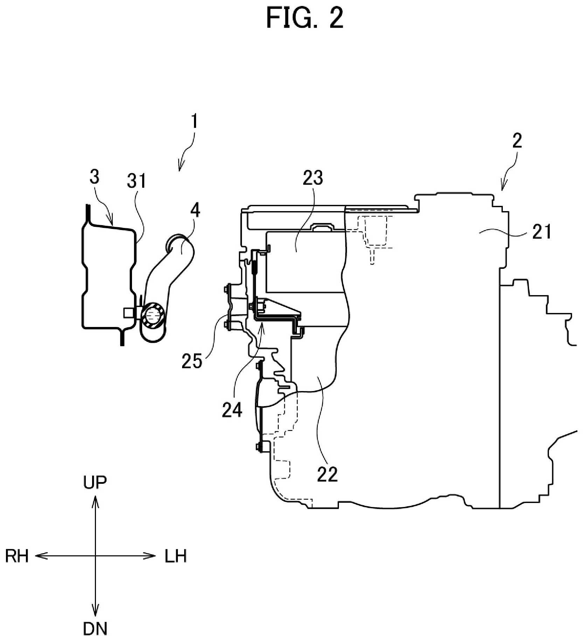

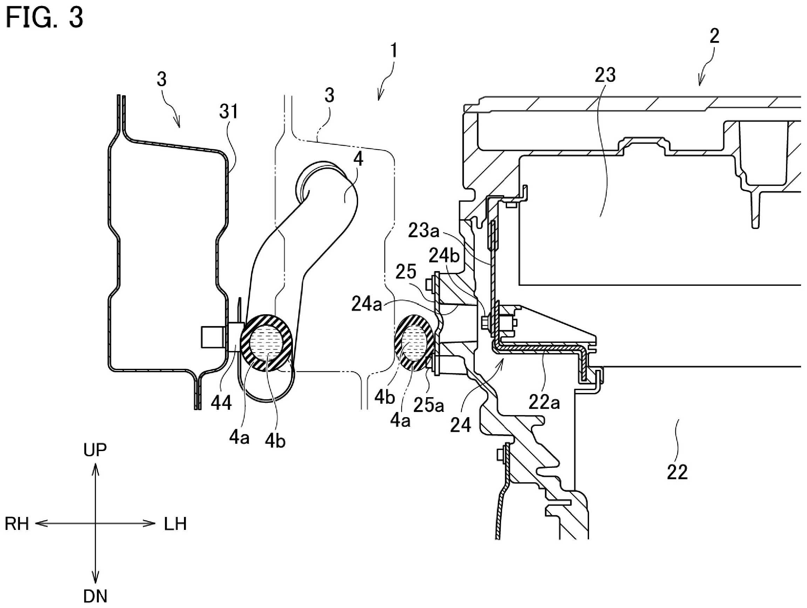

As illustrated in FIG. 1, the power unit 2 is mounted in the drive chamber DR of the vehicle V and fixed to a non illustrated structural member of the vehicle V. As illustrated in FIGS. 2 and 3, the power unit 2 includes a housing 21, a motor 22, and an inverter (power converter) 23. The motor 22 is a driving source for applying driving force to the wheels of the vehicle V, and is, for example, a 3-phase AC synchronous motor. The motor 22 has a motor-side busbar 22a for receiving power supply from the inverter 23. The inverter 23 converts a direct current fed from a driving high-voltage battery 6 described later via a junction box into a 3-phase AC by a power semiconductor, and supplies the converted 3-phase AC to the motor 22. The inverter 23 has an inverter-side busbar 23a for supplying the power converted to the 3-phase AC to the motor 22. As illustrated in FIGS. 2 to 4, the motor-side busbar 22a and the inverter-side busbar 23a are electrically connected and fixed to each other by the busbar fixing bolts 24b at a busbar connection portion (connection portion) 24. The housing 21 is formed of metal, and houses the motor 22, the inverter 23, the motor-side busbar 22a, and the inverter-side busbar 23a therein.

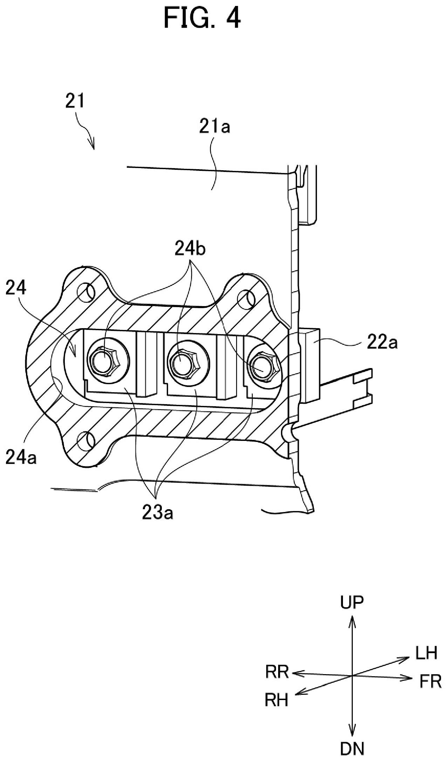

As illustrated in FIGS. 2 to 4, the busbar connection portion 24 is provided on the right of the vehicle V in the housing 21. As illustrated in FIG. 4, a substantially rectangular opening 24a, which opens rightward and has four rounded corners in plan view, is formed in the right side wall 21a of the housing 21 where the busbar connection portion 24 is positioned. The opening 24a is used when the motor-side busbar 22a and the inverter-side busbar 23a are connected and fixed to each other by the busbar fixing bolts 24b, and is an opening that allows access to the busbar connection portion 24 using a tool or the like. When the opening 24a is not covered with the busbar cover 25, the busbar connection portion 24 is exposed to the outside of the housing 21 through the opening 24a. Note that the opening 24a can also be used to release the connection and fixation between the motor-side busbar 22a and the inverter-side busbar 23a, and may be used only for releasing the connection and fixation.

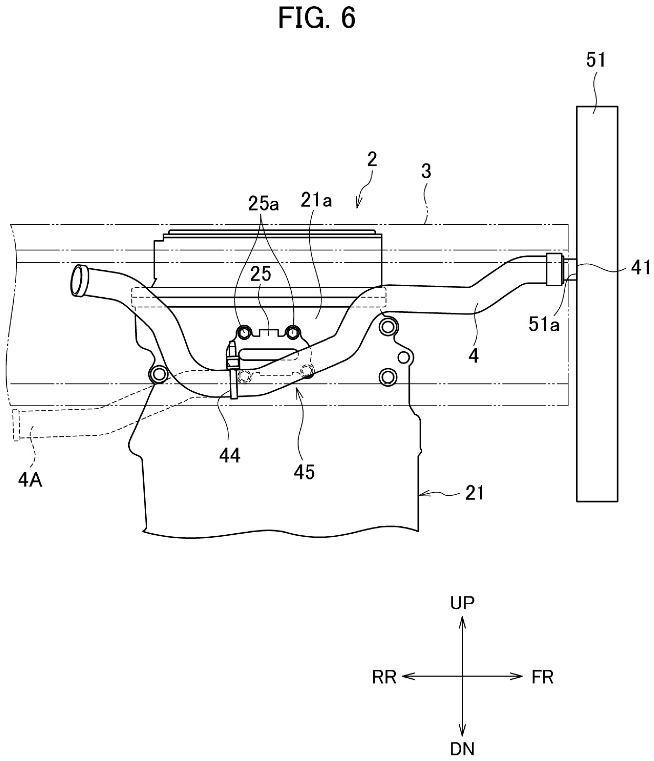

In a state where the busbar connection portion 24 is exposed, there is a possibility that water may enter the housing 21 through the opening 24a or that a user may come into contact with the busbar connection portion 24 (motor-side busbar 22a, inverter-side busbar 23a, busbar fixing bolts 24b) with a finger or the like. To prevent such a situation, after the motor-side busbar 22a and the inverter-side busbar 23a are fixed, the opening 24a is kept in a state of being closed with the busbar cover 25 serving as a protected component. More specifically, as illustrated in FIG. 6, the busbar cover 25, which is formed of a substantially rectangular metal having four rounded corners in plan view, is fixed to the side wall 21a by the cover fixing bolts 25a so as to close the opening 24a. In a state where the busbar cover 25 is fixed to the side wall 21a, the entire opening 24a is tightly covered with the busbar cover 25, thereby preventing water from entering the housing 21 through the opening 24a or preventing a user from coming into contact with the busbar connection portion 24 (motor-side busbar 22a, inverter-side busbar 23a, busbar fixing bolts 24b) with a finger or the like. Since the busbar cover 25 is a separate component from the housing 21 of the power unit 2, there is a possibility that at least a part (for example, ends) of the busbar cover 25 attached to the housing 21 is lower in strength than that of the housing 21. Note that the motor-side busbar 22a and the inverter-side busbar 23a may be fixed to each other in advance, and need not be fixed to each other through the opening 24a. In this case, the opening 24a is used when releasing the connection and fixation between the motor-side busbar 22a and the inverter-side busbar 23a.

As illustrated in FIG. 1, the front side member 3 is a structural member of the vehicle V made of a steel plate or the like, and in the present embodiment, it is a right-side front side member provided in the front portion VF positioned at the front of the vehicle V. The front side member 3 is positioned on the right of the drive chamber DR, and is arranged to face at least a part of the housing 21 in the vehicle width direction. More specifically, as illustrated in FIGS. 2, 3, and 5, the front side member 3 is formed in a rectangular tubular shape and extends in the front-rear direction, and has an inner side surface 31 facing the side wall 21a of the housing 21 in the vehicle width direction. The inner side surface 31 is arranged to face the busbar cover 25 in the vehicle width direction. The inner side surface 31 has a fixing portion 32 to which the liquid hose 4 is fixed.

The battery 6 is a driving high-voltage battery for supplying power to the power unit 2, and is electrically connected to the inverter 23. As illustrated in FIG. 1, the battery 6 is provided on the lower side of the floor panel positioned below the front side member 3. The battery 6 is provided with a non-illustrated cooling unit to which the liquid hose 4 is connected, and the battery 6 is cooled by the cooling unit.

The radiator 5 supplies cooling water for cooling the battery 6 to the cooling unit of the battery 6. As illustrated in FIG. 1, the radiator 5 includes a main body 51 provided at the front of the drive chamber DR of the vehicle V, and a reservoir tank 52. As illustrated in FIG. 6, the main body 51 has an outlet (connection port) 5a positioned above the front side member 3. The main body 51 includes a cooling mechanism for cooling non-illustrated water, and supplies the cooling water obtained by the cooling mechanism to the liquid hose 4 through the outlet 5a. The cooling water returned from the cooling unit flows into the main body 51 through a non-illustrated liquid hose that is connected to the main body 51 and the cooling unit of the battery 6.

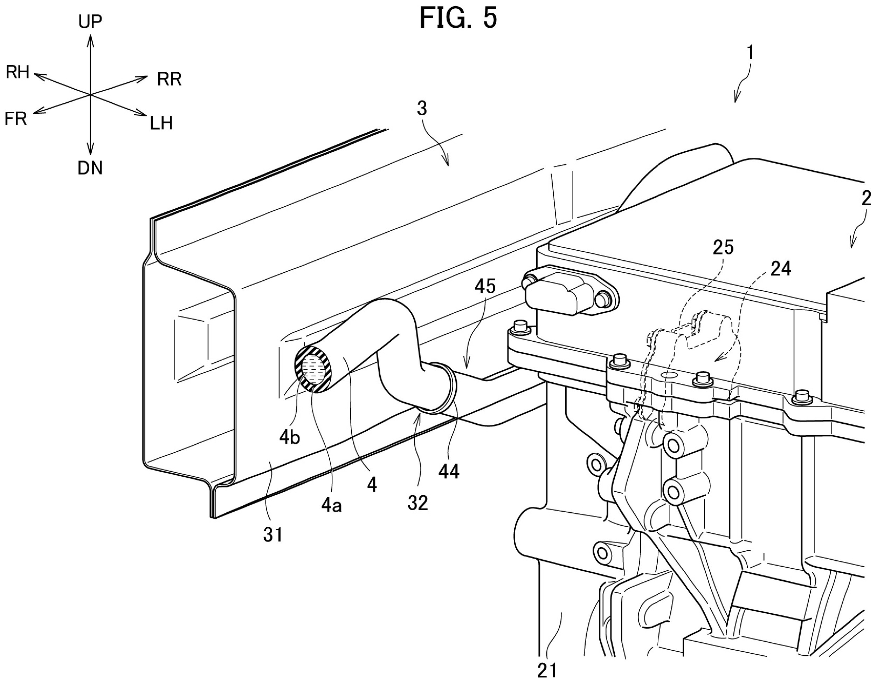

As illustrated in FIG. 1, the liquid hose 4 forms a water channel (flow channel) between the radiator 5 and the cooling unit of the battery 6, and supplies the cooling water to the cooling unit. As illustrated in FIGS. 3 and 5, the liquid hose 4 is composed of a composite material of a cylindrical outer cylinder portion 4a formed of rubber and a liquid (cooling water) 4b present inside the outer cylinder portion 4a. As illustrated in FIGS. 1 and 6, the liquid hose 4 is connected to the outlet 5a of the main body 51 of the radiator 5 at a first connection portion 41, and to the cooling unit of the battery 6 at a second connection portion 42. Further, the liquid hose 4 is connected to the other liquid hose H at a third connection portion 43, and is connected to the reservoir tank 52 through the other liquid hose H. As illustrated in FIGS. 1, 3 and 5, the outer cylinder portion 4a of the liquid hose 4 is fixed to the fixing portion 32 of the front side member 3 by a clip 44 formed of resin. As illustrated in FIGS. 1, 5, 6 and 8, an overlapping portion 45 which is at least a part of the liquid hose 4 is arranged between the inner side surface 31 of the front side member 3 and the busbar cover 25, and overlaps with both the inner side surface 31 of the front side member 3 and the busbar cover 25 in the side view of the vehicle V.

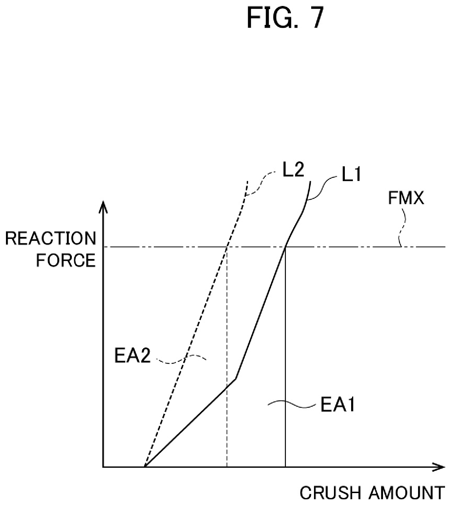

FIG. 7 is a diagram for explaining the impact absorbing characteristics of the liquid hose 4, in which the horizontal axis represents the crush amount and the vertical axis represents the reaction force. In FIG. 7, a line (solid line) L1 illustrates the relationship between the crush amount and the reaction force when an impact is applied to the liquid hose 4, and a line (broken line) L2 illustrates the relationship between the crush amount and the reaction force when an impact is applied to a member made of a solid single material in which the liquid 4b of the liquid hose 4 is replaced with the same material as the outer cylinder portion 4a (rubber in the present embodiment). As illustrated in FIG. 7, in the case of a single material, the reaction force against the crush amount increases continuously as illustrated by the line L2, and the energy absorption amount is represented by the area EA2 of the second region surrounded by the horizontal axis, the vertical axis, and the line L2. Meanwhile, as illustrated in FIG. 7, in the case of the liquid hose 4 made of a composite material with the liquid 4b inside the outer cylinder portion 4a, the reaction force against the crush amount increases stepwise as illustrated by the line L1 because it is not a single material, and the energy absorption amount is represented by the area EA1 of the first region surrounded by the horizontal axis, the vertical axis, and the line L1. In the case of the liquid hose 4, since the reaction force increases stepwise in this way, the crush amount until the upper limit of the reaction force (in the present embodiment, the reaction force that damages the busbar cover 25) FMX illustrated by the chain line in FIG. 7 can be increased, and the energy amount that can be absorbed becomes larger than that in the case of a single material (the area EA1 of the first region > the area EA2 of the second region).

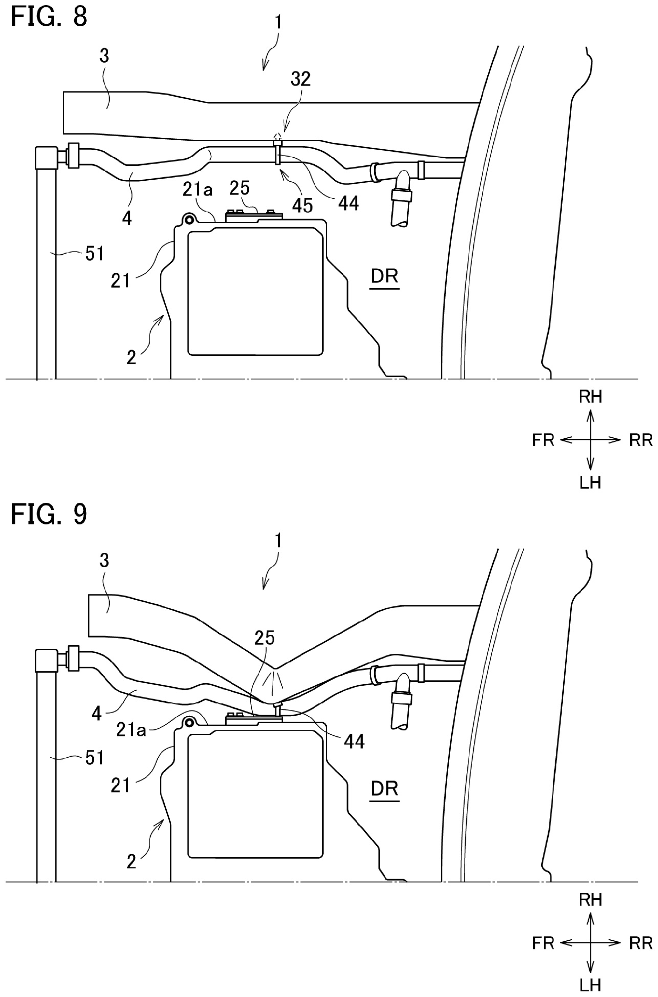

Next, the power unit protection structure 1 at the time of collision of the vehicle V will be described. FIG. 8 illustrates the state of the front portion VF of the vehicle V before collision of the vehicle V, and FIG. 9 illustrates the deformation state of the front portion VF of the vehicle V at the time of frontal collision of the vehicle V. In FIGS. 8 and 9, only the right-side half of the vehicle of FIG. 1 is illustrated. In addition, the chain lines in FIG. 3 illustrate the deformation states of the front side member 3 and the liquid hose 4 at the time of frontal collision of the vehicle V. Note that the collision is not limited to frontal collision, and any deformation that causes the front side member 3 to be deformed toward the power unit 2 side and interfere with the busbar cover 25 is sufficient. As illustrated in FIG. 9, at the time of frontal collision of the vehicle V, the front side member 3 is bent and deformed to the left of the vehicle V (toward the power unit 2 side), and the liquid hose 4 is sandwiched between the deformed front side member 3 and the power unit 2. When the front side member 3 is deformed, the liquid hose 4 moves toward the power unit 2 side together with the front side member 3. More specifically, the overlapping portion 45 of the liquid hose 4 is sandwiched between the front side member 3 and the busbar cover 25 fixed to the side wall 21a of the housing 21 and/or the adjacent portion thereof, and thus the liquid hose 4 is deformed. Therefore, the liquid hose 4 absorbs the impact force which is applied from the front side member 3 to the busbar cover 25 stepwise, as illustrated by the line L1 in FIG. 7, from the state before deformation illustrated in FIG. 8 to the deformed state illustrated in FIG. 9, thereby reducing or preventing damage to the busbar cover 25. Further, the liquid hose 4 is configured such that, when the liquid hose 4 is deformed, the liquid 4b inside the outer cylinder portion 4a moves to the reservoir tank 52, thereby preventing the liquid 4b from spurting out.

Hereinafter, the operation and effect of the present embodiment will be described.

At least a part of the liquid hose 4 (overlapping portion 45) is arranged between the front side member 3 (inner side surface 31) and the busbar cover 25 facing each other in the vehicle width direction, and overlaps with both the front side member 3 and the busbar cover 25 in the side view of the vehicle V. For this reason, at the time of collision of the vehicle V, the liquid hose 4 is sandwiched between the front side member 3 and the busbar cover 25 and deforms to absorb an impact force. Therefore, it is possible to prevent the bent front side member 3 from directly interfering with the busbar cover 25 which is a protected component of the power unit 2, thereby reducing or preventing the damage to the busbar cover 25. By preventing or minimizing the damage to the busbar cover 25, it is possible to suppress the formation of a gap between the busbar cover 25 and the opening 24a of the power unit 2, thereby preventing water from entering the power unit 2 or preventing a user from inserting a finger into the gap.

As an impact absorbing member, the liquid hose 4 provided in the vehicle V for cooling the battery 6 is used. Therefore, a separate component such as a protector is not required as an impact absorbing member, thereby suppressing an increase in weight and cost.

The liquid hose 4 is composed of a composite material of the outer cylinder portion 4a and the liquid 4b. For this reason, when the liquid hose 4 receives an impact, the reaction force increases stepwise, and the collision energy absorption amount becomes larger than that of an impact absorbing member made of a single material. Therefore, damage to the busbar cover 25 can be effectively reduced or prevented by using the liquid hose 4 having a large collision energy absorption amount.

The liquid hose 4 is fixed to the front side member 3. Therefore, at the time of collision of the vehicle V, the liquid hose 4 moves together with the front side member 3 and is sandwiched more reliably between the front side member 3 and the busbar cover 25. In addition, since the front side member 3 is used for fixing the liquid hose 4 positioned between the power unit 2 and the front side member 3, there is no need to additionally provide a bracket or the like for fixing the liquid hose 4 to the other members of the vehicle V.

The liquid hose 4 is connected to the reservoir tank 52 of the vehicle V. Therefore, when the liquid hose 4 is sandwiched between the front side member 3 and the busbar cover 25 at the time of collision of the vehicle V, it is possible to prevent the liquid 4b from spurting out due to a pressure increase in the liquid hose 4.

The liquid hose 4 is connected to the outlet 5a of the radiator 5 positioned above the front side member 3, and forms a water channel between the battery 6 positioned below the front side member 3 and the radiator 5. For this reason, a midway portion of the liquid hose 4 routed from the upward direction at the front toward the substantially oblique downward direction at the rear is arranged between the front side member 3 and the power unit 2 (busbar cover 25). Therefore, for example, as compared with the case where the liquid hose 4 is routed from the main body 51 of the radiator 5 toward the vehicle width direction, it is not necessary to route the liquid hose 4 by making a detour in order to arrange the liquid hose between the front side member 3 and the power unit 2 (busbar cover 25), thereby making it possible to perform routing with a shorter path. Accordingly, it is not necessary to drastically change the routing path of the liquid hose 4 or to drastically increase or change the length of the liquid hose 4.

The busbar cover 25 is a cover for closing the opening 24a that allows access to the busbar connection portion 24 between the motor-side busbar 22a and the inverter-side busbar 23a of the power unit 2. Therefore, it is possible to protect the busbar cover 25 which has a high priority to avoid damage among the portions and components of the power unit 2.

### [Modified Examples]

Although the embodiment of the present invention has been described above, the following configurations may be employed in the present embodiment.

The routing path of the liquid hose 4 is not limited to the above embodiment. For example, as seen in the liquid hose 4A according to the modified example which is illustrated by the broken line in FIG. 6, it may be arranged obliquely downward toward the rear, instead of being routed obliquely upward toward the rear from the vicinity of the clip 44. Therefore, the liquid hose 4A according to the modified example can be routed in a shorter path than the liquid hose 4 according to the above embodiment.

The liquid hose 4 may not be fixed to the front side member 3. For example, the portion of the liquid hose 4 positioned between the power unit 2 and the front side member 3 may not be fixed to the other members of the vehicle V. The liquid hose 4 may be fixed to the power unit 2 or fixed to any member of the vehicle V other than the power unit 2 and the front side member 3.

The liquid hose 4 may not be connected to the reservoir tank 52. The liquid hose 4 may be connected to the inlet (connection port) of the main body 51 of the radiator 5 at the first connection portion 41, and the liquid 4b may be cooling water returning from the cooling unit to the radiator 5. The liquid 4b is not limited to cooling water (water), but may be coolant. The liquid 4b may be used not only for cooling but also for warming the battery 6.

The liquid hose 4 may not form a water channel for cooling the battery 6. For example, the liquid hose 4 may form a water channel for cooling vehicle elements other than the battery 6, such as the power unit 2.

The battery 6 may be installed at a location other than the lower side of the floor panel of the vehicle V. The battery 6 may not be positioned below the front side member 3.

In the above embodiment, the motor-side busbar 22a and the inverter-side busbar 23a are used for electrical connection between the motor 22 and the inverter 23, and the busbar cover 25 is used as a protected component, but the present invention is not limited thereto. The protected component may be a power harness for a high-voltage system that electrically connects the motor 22 and the inverter 23, or a connector connection portion of the power harness for the high-voltage system to the motor 22 or the inverter 23. In addition, the protected component may be a power harness for a low-voltage system that is connected to the motor 22 or the inverter 23, or a low-voltage connector connection portion of the power harness for the low-voltage system to the motor 22 or the inverter 23. In these cases, the location of the motor 22 or the inverter 23 to which the connector connection portion of the power harness for the high-voltage system or the power harness for the low-voltage system is connected corresponds to the busbar connection portion 24.

In the above embodiment, the front side member 3 may have a structure provided with one or more fragile portions, or a structure not provided with a fragile portion. When the front side member 3 is provided with a fragile portion, it becomes easy to assume a deformation form of the front side member 3 at the time of collision of the vehicle V, and it is also possible to set the position of the fixing portion 32 of the front side member 3 to which the liquid hose 4 is fixed based on the assumed deformation form. For example, a portion of the front side member 3 that is assumed to be closest to the busbar cover 25 at the time of collision of the vehicle V may be used as the fixing portion 32. In this case, the liquid hose 4 can be more reliably interposed between the front side member 3 and the busbar cover 25 at the time of collision.

In the above embodiment, the power unit 2 has the busbar cover 25 on the right, and the liquid hose 4 is provided between the front side member 3 and the power unit 2 on the right side of the vehicle V in the vehicle width direction, but the present invention is not limited thereto. For example, the power unit 2 may have the busbar cover 25 on the left , and the liquid hose 4 may be provided between the front side member 3 and the power unit 2 on the left side of the vehicle V in the vehicle width direction.

In the above embodiment, the drive chamber DR in which the power unit 2 is mounted is provided in the front portion VF of the vehicle V, that is, the power unit protection structure 1 is provided in the front portion VF of the vehicle V, but the present invention is not limited thereto. For example, the drive chamber DR may be provided in the rear portion of the vehicle V or in the intermediate portion between the front portion FV and the rear portion. When the drive chamber DR is provided in the rear portion of the vehicle V, the liquid hose 4 is provided between the power unit 2 and the rear side member that is provided in the rear portion of the vehicle V in the vehicle width direction, and the power unit protection structure 1 can be realized by applying the configuration of the front side member 3 to the rear side member, thereby making it possible to achieve the same effect as in the above embodiment.

In the above embodiment, the power unit 2 includes the motor 22 and the inverter 23, and may further include an internal combustion engine.

In the above embodiment, the material of each member is not particularly limited, and may be any material capable of exhibiting the function of each member. For example, the front side member 3 may be formed of a material other than a steel plate. The housing 21 and the busbar cover 25 of the power unit 2 may be formed of a material other than a metal, for example, a resin, a fiber-reinforced resin, a plastic, or the like. The outer cylindrical portion 4a of the liquid hose 4 may be formed of ethylene propylene diene rubber, but may be formed of other rubber, a resin other than rubber, or the like. The clip 44 may be formed of a material other than a resin, for example, a plastic, rubber, a metal, or the like.

In the above embodiment, the fixing means for fixing the respective members to each other is not particularly limited, and may be any means capable of fixing the respective members to each other so as to satisfy the required conditions. For example, the fixation of the motor-side busbar 22a and the inverter-side busbar 23a is not limited to bolt fastening, and other fixing means (screw fixing, welding, bonding, or the like) may be employed. For the fixation of the outer cylindrical portion 4a of the liquid hose 4 to the front side member 3, fixing means other than the clip 44 (fixation via a bracket, bonding, or the like) may be employed.

In the above embodiment, the shape and number of the respective members are not particularly limited, and the respective members may have any shape and number as long as the required conditions of the respective members are satisfied. For example, the shape of the outer cylindrical portion 4a of the liquid hose 4 may be a cylindrical shape having a perfectly circular cross section or an elliptical cross section, or a tubular shape having a rectangular cross section. The opening 24a of the housing 21 and the busbar cover 25 may have a shape other than a substantially rectangular shape having four rounded corners in plan view. Further, the number of the busbar fixing bolts 24b and the cover fixing bolts 25a is not limited to those illustrated in the drawings.

Although the contents of the present invention have been described with reference to the embodiment and modified examples thereof, it is obvious to those skilled in the art that the present invention is not limited to these descriptions and that various modifications and improvements are possible.

### REFERENCE SIGNS LIST

1 Power unit protection structure for a vehicle; 2 Power unit; 22a Motor-side busbar; 23a Inverter-side busbar; 24 Busbar connection portion (connection portion); 24a Opening; 25 Busbar cover (protected component); 3 Front side member (side member); 4 Liquid hose (radiator hose); 45 Overlapping portion; 5 Radiator; 51a Outlet (connection port); 52 Reservoir tank; 6 Battery; V Vehicle

## Claims

1. A power unit protection structure for a vehicle, comprising:
a side member of the vehicle;
a power unit mounted on the vehicle and having a protected component arranged to face the side member in a vehicle width direction; and
a liquid hose connected to a radiator of the vehicle,
wherein at least a part of the liquid hose is arranged between the side member and the protected component and overlaps with both the side member and the protected component in a side view of the vehicle.

2. The power unit protection structure for a vehicle according to claim 1, wherein the liquid hose is fixed to the side member.

3. The power unit protection structure for a vehicle according to claim 1 or 2, wherein the liquid hose is connected to a reservoir tank of the vehicle.

4. The power unit protection structure for a vehicle according to any one of claims 1 to 3, wherein the liquid hose is connected to a connection port of the radiator positioned above the side member, and forms a flow path between a battery positioned below the side member and the radiator.

5. The power unit protection structure for a vehicle according to any one of claims 1 to 4, wherein the protected component is a cover for closing an opening that allows access to a connection portion between a motor-side bus bar and an inverter-side bus bar of the power unit.
